# EUROPÄISCHE PATENTANMELDUNG

(11) **EP 0 839 948 A2**
(43) Veröffentlichungstag der Anmeldung: **06.05.1998**
(21) Anmeldenummer: 97118840.4
(22) Anmeldetag: 29.10.1997
(51) Int. Cl.: D06N 7/00, B29C 43/30

(54) **Flächengebilde aus Natur- und/oder Kunststoffen mit vorbestimmter, dauerhafter Musterung**

(30) Priorität: 04.11.1996 DE 19645406
(71) Anmelder: DLW Aktiengesellschaft, D-74321 Bietigheim-Bissingen (DE)
(72) Erfinder: Vieluf, Hans-Dieter, 27753 Delmenhorst (DE)
(74) Vertreter: Müller-Boré & Partner Patentanwälte

(57) **Zusammenfassung**

Es werden Flächengebilde auf Basis von Natur- und/oder Kunststoffen (kurz "FNK") beschrieben mit einer sich mindestens teilweise von mindestens einer Oberfläche in das Material der FNK erstreckenden, in Form- und Farbgebung vorbestimmten, dauerhaften Musterung. Weiterhin wird ein Verfahren beschrieben, mit dem die FNK hergestellt werden können. Die FNK können als Wand-, Decken-, Bodenbelag, Dekorfolie oder künstliches Furnier verwendet werden.

## Beschreibung

Die Erfindung betrifft Flächengebilde auf Basis von Natur- und/oder Kunststoffen (im folgenden kurz "FNK" genannt), die eine vorbestimmte, gegebenenfalls zumindest teilweise latente, dauerhafte Musterung aufweisen sowie deren Verwendung und Verfahren zu deren Herstellung.

FNK mit einer Farbmusterung sind bekannt und werden in großem Umfang als Wand-, Decken- und Bodenbeläge sowie als Dekorfolien oder künstliche Furniere verwendet. Insbesondere werden derartige gemusterte FNK als flexible Bodenbeläge eingesetzt.
FNK werden üblicherweise hergestellt, indem alle Komponenten, wie z.B. polymeres Bindemittel, Färbemittel, Füllstoffe, Additive, Bearbeitungshilfsmittel und andere Hilfsstoffe vorgemischt und über Aggregate, wie z.B. Innenmischer, Zweiwellenextruder, Planetwalzenextruder, plastifiziert und granuliert werden. Nachfolgend werden die Granulatteilchen in Verdichtungsaggregaten, wie z.B. Kalander, Doppelbandpresse oder statische Presse, zu einer Bahn oder einer Platte verpreßt. Zur Erzielung mehrfarbig strukturierter Bahnen oder Platten können diese anschließend mit einem Muster bedruckt werden. Dies hat jedoch u.a. den Nachteil, daß sich die Musterung nur auf der Oberfläche des Bahnenmaterials befindet und somit nicht dauerhaft ist, weil sie sich beim Gebrauch der Bahnen oder Platten abnutzt.

Um eine dauerhafte Musterung zu erzielen, können verschiedenfarbige Granulate in den vorgenannten Verdichtungsaggregaten zu Bahnen oder Platten verpreßt werden. Die so erhaltenen FNK können verwendet werden, so wie sie sind, z.B. als Bodenbelag, oder sie werden auf ein Trägermaterial verpreßt, insbesondere im Falle von Linoleum-Bodenbelägen.

FNK der vorbeschriebenen Art ohne Träger werden bei Verwendung als Bodenbeläge als homogene Bodenbeläge bezeichnet. Der Begriff "homogen" ist daher so zu verstehen, wie er in DIN 16951 bzw. DIN EN 649 für flexible PVC-Bodenbeläge definiert ist. Solche Bodenbeläge bestehen aus einer oder mehreren Schichten gleicher Zusammensetzung und sind mehrfarbig durchgehend gemustert. Die physikalischen Eigenschaften solcher Bodenbeläge sind von der Oberseite bis zur Unterseite gleichbleibend (= homogen).

Homogene elastische Bodenbeläge lassen sich z.B. auf folgendem Weg erhalten: Die Bestandteile für die Bahn (d.h. für den herzustellenden Bodenbelag) werden in einem Wirbelmischer kalt vermischt und anschließend in einem Innenmischer plastifiziert. Die Masse wird auf ein Walzwerk gegeben und ein Fellstreifen abgezogen, der nachfolgend einem Heißgranulator zugeführt wird. Das so erhaltene Granulat wird erwärmt und im Walzenspalt eines Kalanders zu einem weiteren Fell gewalzt. Eine mehrfarbige Struktur wird erreicht, wenn z.B. andersfarbiges Granulat vor der Herstellung des Fels zugemischt wird. Eine andere Möglichkeit zur Herstellung von homogenen elastischen Bodenbelägen besteht darin, die Komponenten, wie z.B. das polymere Bindemittel und die Füllstoffe mit den Hilfsstoffen, getrennt über gravimetrische Dosierungen einem Zweiwellenextruder zuzuführen und dort zu plastifizieren. Das Plastifikat wird kontinuierlich in einen Einwellenextruder überführt und nachfolgend zu einem Granulat verarbeitet, indem das austretende Plastifikat mittels rotierender Messer abgeschlagen wird. Das so erhaltene Granulat kann z.B. mittels einer Zweitrommelauma zu einer Platte verpreßt werden. Zur Erzielung der Musterung kann kurz vor Austritt der Masse an der Lochplatte des Einwellenextruders kaltes, andersfarbiges Granulat zudosiert werden.

Die Herstellung eines FNK, das durch einen Träger verstärkt ist, wird am Beispiel der Herstellung eines Linoleum-Bodenbelags beschrieben.

Die Herstellung von Linoleum als Bodenbelag in Bahnen geschieht in der Weise, daß die alle Komponenten, wie z.B. den Bedford-Zement (kurz: B-Zement), mindestens einen Füllstoff und mindestens ein Färbemittel, enthaltende Mischmasse mit Hilfe eines Walzwerks, wie einem Kalander, auf ein Trägermaterial gepreßt wird.

Ein mehrfarbiger Linoleum-Bodenbelag wird erhalten, indem zwei oder mehr unifarbene, d.h. einfarbig hergestellte und granulierte Linoleummischungen miteinander vermischt und erst dann dem Kalander zugeführt werden. In Sonderfällen wird die mehrfarbige Linoleummischung vor dem Kalandern noch in Walzwerken zu gestreiften Fellen verstreckt, um 90°C verdreht und mit Friktion kalandert, woraus sich die bekannten, dem natürlichen Marmor nachempfundenen Musterbilder ergeben.

Es ist weiterhin möglich, gemustertes Linoleum dadurch zu erzeugen, daß man mehrfarbige Linoleummischungen definiert streut, in Sonderfällen jede Farbe durch eine Schablone, und diese Schüttung verzugsfrei verdichtet, entweder stationär (absatzweise) oder mit hohem apparativen Aufwand kontinuierlich in einer Doppelbandpresse.

Bei der üblichen Verarbeitungsweise war es bisher nicht möglich, nicht gerichtete Farbstrukturen in den mehrfarbigen Bodenbelägen auf einfache Weise zu erzielen. Aufgrund der Förderung des Granulatmaterials in Kalandrierrichtung und gleichzeitigem Erhitzen und Verpressen entsteht eine in Förderrichtung länglich verzogene Musterung. Damit ist es mit herkömmlichen Verfahren nicht möglich, in einem Arbeitsgang eine Musterung zu erzielen, die im wesentlichen keine Vorzugsrichtung hat, sondern die Musterstruktur ist, wie vorstehend erwähnt, stets parallel zur Förderrichtung ausgerichtet.

Zur Beseitigung dieses Nachteils können, wie vorstehend erwähnt, zwei oder mehr der im ersten Arbeitsgang hergestellten homogenen mehrfarbigen FNK um jeweils 90° verdreht übereinandergestapelt und nochmals einer Kalandrier- oder Walzbehandlung unterworfen werden, wobei die übereinander angeordneten FNK unter gegenseitiger Durchdringung miteinander verbunden werden. Dadurch ergibt sich durch Überlagerung der jeweils längs gerichteten, aber um 90° verdrehten Musterstrukturen eine Struktur, bei der keine Vorzugsrichtung mehr erkennbar ist. Dazu ist allerdings mindestens ein weiterer Arbeitsschritt erforderlich, der einerseits die Produktionskosten erhöht und andererseits durch die zusätzliche Anwendung von Hitze und Druck zu einer Beeinträchtigung der Produkteigenschaften führen kann.

In all den beschriebenen Fällen ist die Herstellungsweise der Musterung technisch aufwendig und kostenintensiv und man ist rezeptiv eng an stoffliche Erfordernisse gebunden. Ferner ist die Gestaltungsmöglichkeit der Muster stark eingeschränkt, wobei im allgemeinen nur mehr oder weniger zufällig entstehende Muster gebildet werden können.

Der technische Aufwand steigt beträchtlich, wenn z.B. ein geometrisches oder florales Dessin in dauerhafter Weise produziert werden soll, d.h. eine Musterung, die nicht durch Bedrucken der gefertigten Bahn erreicht wird. Wird andererseits der Belag mit geeigneten Farben und Verfahren bedruckt, entsteht zusätzlicher technischer Aufwand, wobei, wie vorstehend beschrieben, der Nutzen trotzdem gering ist, da die dünne Farbschicht sich relativ schnell abnutzt und damit nicht der Nutzererwartung entspricht.

Es ist daher Aufgabe der vorliegenden Erfindung, FNK mit einer dauerhaften, in Farb- und Formgebung vorbestimmten Musterung bereitzustellen, sowie ein Verfahren, mit dem derartige FNK auf einfache und kostengünstige Weise hergestellt werden können. Insbesondere sollen die Musterungsmöglichkeiten bei der Herstellung der FNK erheblich erweitert werden, wobei die technisch aufwendigen Misch-, Dosier- und Hilfsprozesse, die bei herkömmlicher Herstellungsweise auftreten, entfallen sollen. Ferner soll in den erzeugten Mustern die Fabrikationsrichtung nicht mehr erkennbar sein und trotzdem das Muster auch bei Abnutzung der Oberfläche dauerhaft in den FNK erhalten bleiben.

Diese Aufgabe wird durch die in den Patentansprüchen gekennzeichneten Gegenstände gelöst.

Die erfindungsgemäßen FNK weisen eine sich mindestens teilweise von mindestens einer Oberfläche in das Bahnen- oder Plattenmaterial erstreckende, in Farb- und Formgebung vorbestimmte und dauerhafte Musterung auf, die im nichtsichtbaren Bereich auch zumindest teilweise latent sein kann. Dadurch, daß die Musterung das Material der FNK mindestens teilweise durchdringt, bleibt sie auch bei Abnutzung der Oberfläche der FNK erhalten, im Gegensatz zu z.B. einer aufgedruckten Musterung. Vorzugsweise durchdringt die Musterung im wesentlichen die gesamte Dicke der FNK.

Die Musterung wird erfindungsgemäß dadurch erreicht, daß spezielle Färbemittel verwendet werden, die ausgewählt sind aus der Gruppe der natürlichen Farbstoffe, synthetischen Farbstoffe, anorganischen Pigmente und organischen Pigmente. Erfindungsgemäß werden die Färbemittel aus der vorgenannten Gruppe dahingehend ausgewählt, daß sie ihre Farbe durch Bestrahlung mit bestimmten Strahlen entweder erst erzeugen, oder sich die bereits bestehende Farbe in Farbton und/oder Farbintensität verändert. Damit verhalten sich die erfindungsgemäß verwendeten Färbemittel ähnlich, wie beispielsweise die Leukofarbstoffe, die in der reduzierten Form entweder keine oder eine andere Farbe besitzen, als in der oxidierten Form. Im Gegensatz hierzu wird die Farberscheinung oder -änderung erfindungsgemäß jedoch durch Bestrahlung erzielt. Vorzugsweise ist die erfindungsgemäß erzeugte Farbgebung oder -änderung irreversibel.

Als Strahlenarten sind erfindungsgemäß alle Strahlen verwendbar, die zu einer Farbgebung oder Farbveränderung der ausgewählten Färbemittel führen, also prinzipiell jegliche Wellen- und/oder Teilchenstrahlung. Dazu zählen insbesondere die elektromagnetische Strahlung, wie z.B. Infrarot-Strahlung, ultraviolette Strahlung, Röntgenstrahlung usw. und die Korpuskular- oder Partikelstrahlung, wie Elektronenstrahlung, Ionenstrahlung (α-Teilchen, Deuteronen usw.).

Da sich das einmal erzeugte Muster möglichst nach der Herstellung nicht mehr, bzw. nur noch kontrolliert (wie später erläutert wird) verändern soll, ist es bevorzugt, solche Strahlen zu verwenden, die im Spektrum der in der natürlichen Umgebung vorhandenen Strahlung, also z.B. Sonnenlicht, künstliche Beleuchtung usw., nicht oder nur in unbeachtlicher Menge enthalten sind. Ferner sind die Strahlen auch nach Sicherheits- und Handhabungsgesichtspunkten auszuwählen, wobei die Strahlen in der Lage sein müssen, zumindest teilweise in das Material einzudringen. Daher sind aus dem Bereich der elektromagnetischen Strahlung die UV-Strahlung und Röntgenstrahlung und aus dem Bereich der Teilchenstrahlung die Elektronenstrahlung und α-Teilchen bevorzugt.

In der einfachsten Weise wird das Muster erfindungsgemäß unter Verwendung von nur einem Färbemittel, z.B. ein Pigment, und nur einer Strahlenart, z.B. Elektronenstrahlung, erzeugt. Damit lassen sich mit Hilfe von Schablonen, welche die Strahlen nur an den vorbestimmten offenen Bereichen durchtreten lassen, durch Variation der Form der offenen Bereiche, das Auflegen der Schablonen auf verschiedene Bereiche der Oberfläche der zuvor erzeugten FNK und durch mehrmaliges Bestrahlen praktisch beliebig viele verschiedene Muster erzeugen. Durch Variation der Strahlungsdosis und der Strahlungsenergie läßt sich dabei die Farbintensität und/oder die Tiefe der Musterbildung im Material steuern.

Als Schablonen können sowohl Schablonen verwendet werden, die aus geeigneten Materialien vorgefertigt (z.B. vorgestanzt) sind und auf das zu bestrahlende FNK aufgelegt werden, als auch z.B. Schablonen, die aufgedruckt und nach dem Bestrahlen wieder entfernt werden. Die Musterung kann auch ohne Einsatz der Schablonentechnik, beispielsweise durch gezielte, pulsierende bzw. programmgesteuerte Bestrahlung, erzeugt werden.

Die Vielfalt der Musterungen kann noch erhöht werden, indem mehrere Färbemittel, die auf unterschiedliche Strahlenarten, Bestrahlungsintensität und/oder Bestrahlungsdauer reagieren, eingesetzt werden.

Zusätzlich oder alternativ zu der Musterungsmöglichkeit mit Hilfe strahlungsreaktiver Färbemitteln kann die Lichtechtheit von Färbemittel für die Musterbildung genutzt werden. Farbstoffe und Pigmente weisen im allgemeinen eine mehr oder weniger ausgeprägte Lichtechtheit auf, d.h. eine Widerstandsfähigkeit gegen Farbveränderung durch direkte Einwirkung von Tageslicht. Durch gezielte Veränderung der Lichtechtheit (d.h. Erhöhung der Lichtechtheit oder Schwächung der Lichtechtheit) durch Bestrahlung von Teilen der Oberfläche der FNK mit Hilfe von beispielsweise einer Schablone kann erreicht werden, daß sich bei Aussetzen der FNK an Tageslicht ein vorbestimmtes Muster an der Oberfläche bildet. Dadurch, daß die Veränderung der Lichtechtheit durch Eindringen der Strahlung in das Material bewirkt wird, entsteht ein latentes Muster, das immer nur an der Oberfläche der FNK bei Einwirkung von Tageslicht entsteht. Das Muster ist jedoch auch in tieferen Schichten, wenn auch zunächst latent, vorhanden und wird bei Abnutzung der Oberflächenschicht stets und kontinuierlich nachgebildet.

Durch Kombination der Musterbildung mit Hilfe von strahlungsreaktiven Färbemitteln und durch Veränderung der Lichtechtheit dieser oder anderer Färbemittel läßt sich die Vielfalt der Dessinmöglichkeiten noch erhöhen.

Ein wesentlicher Vorteil der erfindungsgemäßen FNK ist daher darin zu sehen, daß in den auf einfache Weise hergestellten FNK nachträglich durch Bestrahlen praktisch jedes gewünschte Muster mit scharf abgegrenzten Farbbereichen und Farbnuancen in dauerhafter Weise hergestellt werden kann.

Zusätzlich zu den erfindungsgemäß eingesetzten strahlungsreaktiven und/oder in ihrer Lichtechtheit veränderbaren Färbemittel können die erfindunsgemäßen FNK auch herkömmliche Färbemittel enthalten, die den Bahnen oder -platten einen Grundfarbton oder ein Grundfarbmuster verleihen.

Als Bindemittel, kann für die Herstellung der erfindungsgemäßen FNK jedes Material verwendet werden, das für die Herstellung von Bahnen oder Platten, insbesondere von elastischen Bodenbelägen geeignet ist, wie z.B. Kunststoffe auf Basis von Polyvinylchlorid (PVC), Ethylenvinylacetat-Copolymer (EVA), Homo- oder Copolymere von ethylenisch ungesättigten Verbindungen oder einem Gemisch davon, wie Polyethylen, Polypropylen, ggf. mit einem oder mehreren Comonomeren, Ethylen-Alkylacrylat-Copolymere, und Gemische davon. Weiterhin können Terpolymere, wie Ethylen-Propylen-Dien-Mischpolymere (EPDM), Blockcopolymere, wie Styrol-Isopren-Styrol (SIS) und Styrol-Butadien-Styrol (SBS) verwendet werden. Auch Bindemittel auf Basis von Leinöl oder anderen, trocknenden Ölen sind geeignet. Von den vorgenannten Bindemitteln sind PVC und Leinöl (Linum oleum) bevorzugt.

Die erfindungsgemäßen FNK können weiterhin Füllstoffe, wie z.B. Kreide, Kaolin, Talkum, Holzmehl, Quarzmehl, Dolomit, Kieselerde, Schwerspat und Schiefermehl oder ein beliebiges Gemisch davon aufweisen, wobei der Anteil der Füllstoffe, bezogen auf die Gesamtmenge des FNK 15 bis 80 Gew.-%, bevorzugt 50 bis 70 Gew.-%, besonders bevorzugt 60 bis 65 Gew.-%, beträgt.

Ggf. können Antioxidantien, UV-Stabilisatoren sowie weitere übliche Hilfsstoffe, wie z.B. Gleitmittel, Antistatika oder Verarbeitungshilfsmittel sowie mindestens ein Sensibilisator zum Gesamtansatz, d.h. zu den Komponenten aus denen die erfindungsgemäßen FNK hergestellt werden, zugesetzt werden. Diese Hilfsstoffe sind in diesem technischen Gebiet an sich bekannt.

Die erfindungsgemäßen FNK können für jeglichen Verwendungszweck eingesetzt werden, vorzugsweise als Wand-, Decken-, Bodenbelag, Dekorfolie oder künstliches Furnier. Besonders bevorzugt ist die Verwendung als Bodenbelag.

Die FNK können verwendet werden, so wie sie nach der Form- und Farbgebung erhalten werden. Sie können jedoch auch mit einem Trägermaterial verstärkt werden. Als Träger kann jegliches Material auf Basis natürlicher und/oder synthetischer Folien, Gewebe, Gelege, Vliese oder Gewirke sowie textiler Werkstoffe eingesetzt werden. Insbesondere können die für Träger-verstärkte Bodenbeläge verwendeten Trägermaterialien eingesetzt werden. Als Beispiele seien Jutegewebe, Mischgewebe aus natürlichen Fasern, wie Baumwolle und Zellwolle, Glasfasergewebe, mit Haftvermittler beschichtetes Glasfasergewebe, Mischgewebe aus Synthesefasern, Gewebe aus Kern/Mantelfasern mit z.B. einem Kern aus Polyester und einer Ummantelung aus Polyamid, genannt. Als Haftvermittler für Glasfasergewebe kann beispielsweise eine Beschichtung der Glasfasern aus einem Styrol-Butadien-Latex verwendet werden. Bei Bodenbelägen auf Basis von Linoleum sind Jutegewebe und mit Haftvermittler beschichtete Glasfasergewebe bevorzugt. Grundsätzlich kommen jedoch als Träger für die FNK alle für diesen Zweck geeigneten Materialien in Frage, z. B. Hartfaserplatten, HDF-, MDF- und LDF-Platten (d. h. Span- bzw. Faserplatten mit hoher, mittlerer oder niedriger Verdichtung), anorganische Platten (z. B. Gipskartonplatten) etc.

Der Träger kann entweder auf einer Oberfläche des FNK angeordnet sein oder er befindet sich zwischen zwei der Bahnen oder Platten des FNK. Dabei beträgt die Dicke einer oder der beiden Nutzschichten jeweils zwischen etwa 1 und etwa 6 mm, vorzugsweise etwa 2 bis etwa 4 mm. Bei einem Aufbau von zwei Nutzschichten und einem dazwischen angeordneten Träger können die Nutzschichten unterschiedlich dick sein, weisen jedoch vorzugsweise etwa die gleiche Schichtdicke auf. Ferner weist mindestens eine der beiden Nutzschichten eine Färbung oder ein Farbmuster auf.

Die erfindungsgemäße Art der Musterung ist nicht auf bahnen- oder plattenförmige Flächengebilde beschränkt, sondern das Muster kann auf erfindungsgemäße Art auch auf jedem anderen flächigen oder dreidimensionalen Gebilde aus den unterschiedlichsten Materialien, wie z.B. Kunststoff, Metall, Textilien, Glas, Keramik, Email usw. erzeugt werden.

Die erfindungsgemäßen FNK können hergestellt werden, indem die Komponenten für die Bahnen oder Platten, wie z.B. ein Kunststoff-Bindemittel, mindestens ein Bestandteil aus der Gruppe natürlicher Farbstoffe, synthetischer Farbstoffe, anorganischer und organischer Pigmente, der seine Farbe durch Bestrahlung erlangt oder verändert sowie ggf. übliche Hilfsstoffe und Verarbeitungshilfsmittel, Additive, Füllstoffe und mindestens ein Bestandteil aus der Gruppe natürlicher Farbstoffe, synthetischer Farbstoffe, anorganischer und organischer Pigmente, der seine Farbe durch Bestrahlung im wesentlichen nicht verändert, vorgemischt, plastifiziert und mittels geeigneter Aggregate, wie ein Kalander, eine statische Presse, eine Doppelbandpresse und dergleichen, in die Form einer Bahn oder Platte gebracht wird. Vorzugsweise wird dem Gemisch aus den für die Herstellung der FNK verwendeten Komponenten mindestens ein geeigneter Sensibilisator zur Aktivierung und/oder Verstärkung der Strahlungsreaktion zur Bildung des Musters zugegeben. Anschließend wird die Musterung durch einmaliges oder mehrmaliges Bestrahlen der erhaltenen Bahn oder Platte mit geeigneter Strahlung mit Hilfe von einer oder mehreren Schablonen erzeugt. Dabei wird die Strahlenart bzw. die Strahlenarten, deren Intensität und Bestrahlungsdauer so ausgewählt und eingestellt, daß das letztlich gewünschte Musterbild erhalten wird.

Die Bestrahlung kann auch mit einer Schablone durchgeführt werden, die auf das erhaltene FNK z.B. mittels Siebdruck aufgebracht wurde und nach der Bestrahlung wieder entfernt wird. Es können auch mehrere Schablonen nacheinander aufgedruckt werden, wobei jeweils vor dem Entfernen der betreffenden Schablone das FNK durch die offenen Bereiche der gedruckten Schablone bestrahlt wird.

Es ist ferner möglich, das Musterbild ohne Zuhilfenahme einer Schablone durch gezielte Bestrahlung ausgewählter Bereiche der Oberfläche des FNK mit pulsierenden und/oder computergesteuerten Strahlen zu erzeugen.

Die vorliegende Erfindung wird anhand des nachfolgenden Beispiels näher erläutert:

Es wurde ein einfarbiger Linoleum-Bodenbelag hergestellt, indem die Komponenten, nämlich Bedford-Zement als Bindemittel, Füllstoffe und Farbstoffe/Pigmente, vorgemischt, homogenisiert und mittels eines Kalanders in die Form einer Bahn bzw. Platte gebracht wurden. Anschließend wurde die Musterung durch Auflegen einer Schablone (Lochblech) und intensives Bestrahlen mit UV-Licht erzeugt, d. h. die Lichtechtheit der verwendeten Farbstoffe bzw. Pigmente wurde in dem bestrahlten Bereichen reduziert, wodurch eine deutliche, dauerhafte Musterung auf der Oberfläche der ursprünglich einfarbigen Bahn bzw. Platte erzeugt wurde. Da die Musterung durch Reduzierung der Lichtechtheit der Farbstoffe bzw. Pigmente erzielt wurde, ist das Muster in den nicht sichtbaren, tieferliegenden Schichten der Bahn bzw. Platte zunächst nur latent vorhanden und bildet sich erst in sichtbarer Weise, wenn es dem Licht ausgesetzt wird, z. B. durch Abtragen der Oberflächenschicht durch Abnutzung der Bahn bzw. Platte.

## Patentansprüche

1. Flächengebilde auf Basis von Natur- und/oder Kunststoffen (FNK) mit einer sich mindestens teilweise von mindestens einer Oberfläche in das Material des FNK erstreckenden, in Farb- und Formgebung vorbestimmten, dauerhaften Musterung, die im nicht-sichtbaren Bereich zumindest teilweise latent sein kann.

2. FNK nach Anspruch 1, wobei sich die Musterung im wesentlichen über die gesamte Dicke des FNK erstreckt.

3. FNK nach einem der Ansprüche 1 oder 2, wobei die Musterung durch mindestens einen Bestandteil aus der Gruppe natürliche Farbstoffe, synthetische Farbstoffe, anorganische Pigmente und organische Pigmente gebildet wird, der seine Farbe durch Bestrahlung erlangt oder verändert, und wobei das FNK ggf. mindestens einen Bestandteil aus der Gruppe natürliche Farbstoffe, synthetische Farbstoffe, anorganische Pigmente und organische Pigmente enthalten kann, der seine Farbe durch Bestrahlung im wesentlichen nicht verändert.

4. FNK nach einem der vorhergehenden Ansprüche, wobei das Bindemittel für das FNK ein Kunststoff auf Basis von einem oder mehreren von Polyvinylchlorid, Ethylen-Vinylacetat-Copolymer, Homo- oder Copolymer von ethylenisch ungesättigten Verbindungen oder einem Gemisch davon, Ethylen-Alkylacrylat-Copolymere und deren Gemische, Ethylen-Propoylen-Dien-Mischpolymere, Styrol-Isopren-Styrol-Blockcopolymer, Styrol-Butadien-Styrol-Blockcopolymer und/oder Leinöl ist.

5. FNK nach einem der vorhergehenden Ansprüche, wobei das FNK auf einen Träger aufgebracht sind oder ein Träger in das Material des FNK eingebettet ist.

6. FNK nach einem der vorhergehenden Ansprüche, wobei auf beide Seiten eines Trägers jeweils mindestens ein FNK aufgebracht ist bzw. sind, wobei mindestens eines die Musterung aufweist.

7. Verwendung eines FNK nach einem der Ansprüche 1 bis 6 als Wand-, Decken-, Bodenbelag, Dekorfolie oder künstliches Furnier.

8. Verwendung nach Anspruch 7, wobei das FNK als Bodenbelag verwendet wird.

9. Verfahren zur Herstellung eines FNK nach einem der Ansprüche 1 bis 6, wobei die Komponenten für das FNK, umfassend das Bindemittel, mindestens einen Bestandteil aus der Gruppe natürliche Farbstoffe, synthetische Farbstoffe, anorganische Pigmente und organische Pigmente, der seine Farbe durch Bestrahlung erlangt oder verändert sowie ggf. Hilfsstoffe, Verarbeitungsmittel, Additive, Füllstoffe und mindestens einen Bestandteil aus der Gruppe natürliche Farbstoffe, synthetische Farbstoffe, anorganische Pigmente und organische Pigmente, der seine Farbe durch Bestrahlung im wesentlichen nicht verändert, vorgemischt, plastifiziert und in die Form einer Bahn oder Platte gebracht werden und anschließend die Bestrahlung zur Bildung des vorbestimmten Musters durchgeführt wird.

10. Verfahren nach Anspruch 9, wobei der Mischung der Komponenten zusätzlich mindestens ein Sensibilisator zur Aktivierung und/oder Verstärkung der Strahlungsreaktion zur Bildung des Musters zugegeben wird.

11. Verfahren nach Anspruch 9 oder 10, wobei die Bestrahlung durch die das jeweilige Muster bildenden, offenen Bereiche einer Schablone erfolgt, deren Material den Durchtritt der Strahlung verhindert.

12. Verfahren nach einem der Ansprüche 9 bis 11, wobei die Schablone auf das FNK aufgedruckt und nach der Bestrahlung entfernt werden kann.

13. Verfahren nach einem der Ansprüche 9 bis 12, wobei die Strahlenart, die Strahlenintensität und die Bestrahlungsdauer so eingestellt werden, daß die Farbgebung bzw. Farbveränderung zumindest in einem sich von der bestrahlten Oberfläche in das Material erstreckenden Teil des FNK erfolgt.

14. Verfahren nach Anspruch 13, wobei die Farbgebung bzw. Farbveränderung im wesentlichen über die gesamte Dicke des FNK erfolgt.

15. Verfahren nach einem der Ansprüche 9 bis 14, wobei das Muster durch wiederholtes Bestrahlen unter Verwendung verschiedener Schablonen und/oder Strahlenarten und/oder Bestrahlungsbedingungen durchgeführt wird.
